(19) **Europäisches Patentamt / European Patent Office / Office européen des brevets**

(11) **EP 1 730 575 B1**

(12) **EUROPEAN PATENT SPECIFICATION**

(45) Date of publication and mention
of the grant of the patent:
**15.08.2007 Bulletin 2007/33**

(21) Application number: **05729449.8**

(22) Date of filing: **22.03.2005**

(51) Int Cl.:
*G02B 26/02* (2006.01)   *G09F 9/37* (2006.01)

(86) International application number:
**PCT/GB2005/001063**

(87) International publication number:
**WO 2005/096066 (13.10.2005 Gazette 2005/41)**

(54) **ELECTROWETTING DISPLAY ELEMENT**

ELEKTROBENETZUNGS-DISPLAY-ELEMENT

ELEMENT D'AFFICHAGE A ELECTROMOUILLAGE

(84) Designated Contracting States:
**DE GB**

(30) Priority: **02.04.2004 GB 0407643**

(43) Date of publication of application:
**13.12.2006 Bulletin 2006/50**

(73) Proprietor: **EASTMAN KODAK COMPANY
Rochester, New York 14650-2201 (US)**

(72) Inventors:
• **CLARKE, Andrew
Hertfordshire HP4 3DG (GB)**
• **WELFARE, Eloise
Hertfordshire AL3 6DU (GB)**

(74) Representative: **Lee, Brenda
Kodak Limited
Patent Department
Headstone Drive
Harrow, Middlesex HA1 4TY (GB)**

(56) References cited:
EP-A- 0 884 714       US-A- 4 419 663
US-A- 4 488 785       US-A1- 2002 167 714

• **STEIN A: "Sphere templating methods for periodic porous solids" MICROPOROUS AND MESOPOROUS MATERIALS, ELSEVIER SCIENCE PUBLISHING, NEW YORK, US, vol. 44-45, 6 April 2001 (2001-04-06), pages 227-239, XP004247153 ISSN: 1387-1811**

Printed by Jouve, 75001 PARIS (FR)

## Description

### Field of the Invention

This invention relates to the field of display elements, in particular to the field of passive display elements.

### Background of the Invention

Many companies are actively seeking to create a display element that is easily manufacturable using roll-to-roll coating techniques. These display elements can be either active, i.e. emit light such as LED, OLED, PLED, EL, or passive, i.e. affect the passage, reflection or refraction of light such as LCD, CLC, e-ink etc.. Some passive systems are bistable such they can be switched and remain switched after the power has been removed. Most configurations previously disclosed can be readily adapted to colour functionality.

Various electrowetting display elements are known in the prior art.

US6473492 discloses a fluid element device that rearranges fluid within a capillary tube. A voltage is used to move the fluid within the capillary to a desired level. US2002/0080920 discloses a filter device using an array of elements based upon US6473492 for use with X-ray imaging equipment. US2003/0085850 discloses an electrostatic device that changes a meniscus shape such that the focal length of the device changes.

US6449081 describes a focussing element based on the electrowetting phenomenon. WO2/002099527 describes a display element with a defined prismatic structure that contains two immiscible fluids together with electrodes such that the fluid can be rearranged with the cell.

### Problem to be solved by the Invention

In display elements based on the rearrangement of liquid it is of benefit to ensure the liquid is captured by capillary forces. This is achieved by making the elements small. Thus the existing art does not easily address the requirement for large pixel areas. Furthermore, the existing art describes structures that necessarily require micro-fabrication and thus relatively complex construction methods not transferable to roll-to-roll manufacture.

It is the purpose of the current invention to provide a new device based on a combination of mechanisms that has previously not been contemplated. This class of device will be adaptable to colour use though the description below is for a single colour element. The display element is capacitive in nature and thus has low power consumption and is switched by low voltages. The element modifies the reflectivity of the surface thereof.

### Summary of the Invention

According to the present invention there is provided a display element comprising at least two porous layers, a conductive liquid residing in the upper layer, the liquid having a contact angle with the material of the upper layer of less than about 60°, the material of the lower layer being conductive and insulated from the liquid with a dielectric covering, the liquid having a contact angle with the material of the lower layer of greater than about 90°, whereby on application of a voltage between the lower layer and the liquid the liquid moves out of the upper layer into the lower layer thereby effecting an optical change in the upper layer.

The invention further provides a display device comprising at least one element as described above including means for connection of each element to a circuit to create a matrix display.

### Advantageous Effect of the Invention

The present invention is simple to manufacture over large areas because of the stochastic structure of the elements and may be manufactured via roll-to-roll techniques. It fulfils the requirement of capturing small liquid elements by capillarity. However the switching time of the element is not limited by its area. It is also simple to address and drive, via suitably patterned passive or active matrix type backplanes.

### Brief Description of the Drawings

The invention will now be described with reference to the accompanying drawings in which:

Figure 1 is a schematic view of an element according to the present invention;

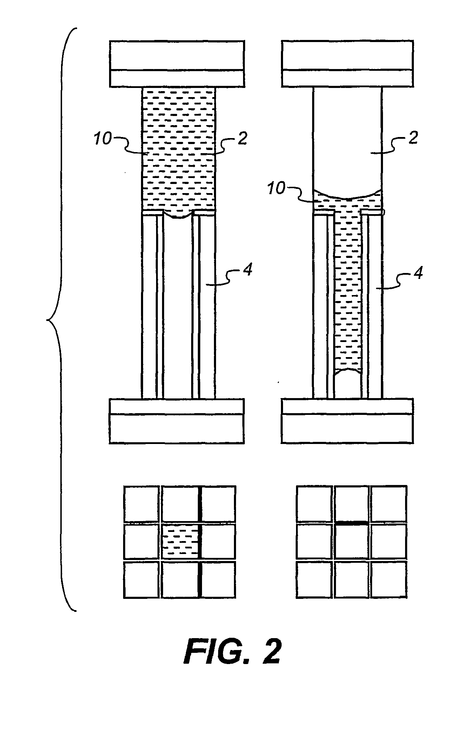

Figure 2 shows the element both in an "on" state and an "off" state;
Figure 3 illustrates a core shell arrangement of particles within the element;
Figure 4 illustrates a different core shell arrangement of particles within the element;
Figure 5 is a schematic view of a second element in accordance with the present invention; and
Figure 6 is a schematic view of the element including an intermediate layer.

### Detailed Description of the Invention

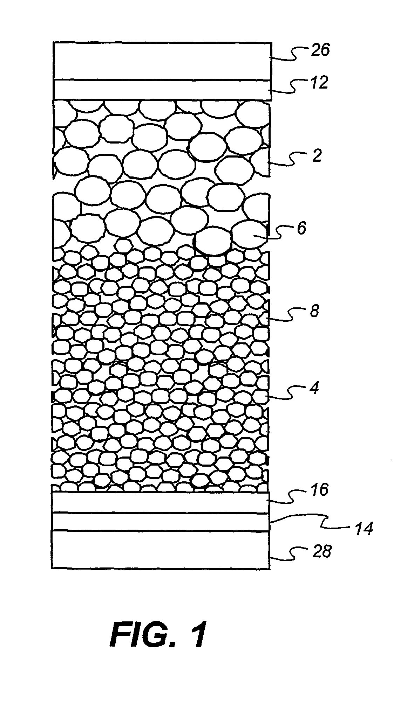

Figure 1 is a schematic view of a display element according to the invention. The invention relates to a passive display element.

Throughout the description and claims the term "upper" defines the side from which an element would be viewed. The term "lower" defines the side opposite the upper side. The terms upper and lower are not to be taken as limiting the orientation of the element according to the invention.

The element is based upon a two layer porous system. In the embodiment shown in Figure 1 the upper layer 2 and lower layer 4 are sandwiched between an upper conductor 12 and a lower conductor 14. The upper conductor 12 should be transparent. The conductor may equally be formed of, for example, wire filaments in which case the material does not have to be transparent. It will be understood by those skilled in the art that it is not necessary for the conductors to be at the top and bottom of the element. What is required is that a voltage can be applied to a liquid 10. The conductors may be at the side of the element or at any other suitable location. An insulating layer 16 is located between the lower layer 4 and the lower conductor 14. The element is encapsulated by an upper substrate 26 and a lower substrate 28. The substrates should be insulating and impermeable to liquid. The upper substrate must be of a transparent material.

The upper layer 2 comprises a plurality of particles 6, such as silica. It will be understood by those skilled in the art that silica is only an example of the material which can be used. Any other lyophilic material may be used that can be matched with the refractive index of the liquid used. The particle sizes would be in the order of 30nm to 2 microns.

A liquid 10 resides in the pore space of the upper layer 2. The liquid may be water but it will be understood by those skilled in the art that it is not essential that the liquid is water. However the liquid must be conductive. The conductive liquid may be created by adding ions to a solvent. Alternatively the conductive liquid may be an ionic liquid.

The refractive index of the particles 6 in the upper layer 2 should be substantially the same as the refractive index of the liquid 10. The size of the particles 6 should be a substantial fraction of the wavelength of light, e.g. 200nm. As the refractive index of the liquid is substantially similar to that of the particles the upper layer will effectively be invisible. What will be seen is the colour of the lower layer 4.

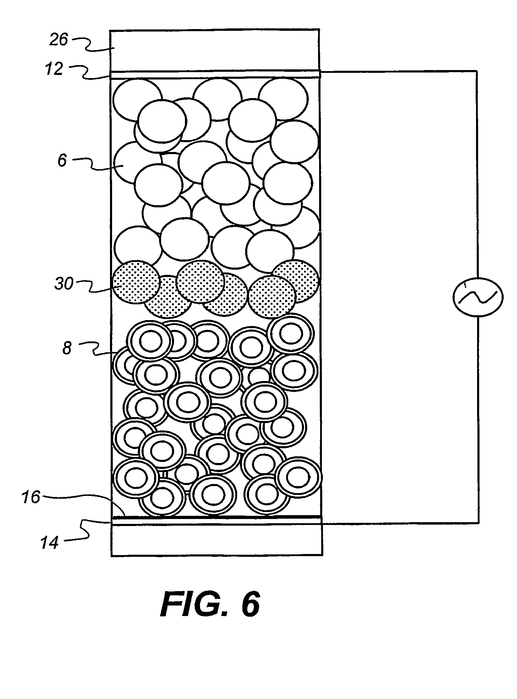

The lower layer 4 comprises a plurality of particles 8. The particles 8 should be of similar size or smaller than the particles 6 in the upper layer 2. The particles may be coloured to provide a coloured pixel or they may be black to provide a black pixel. Alternatively an intermediate layer 30 of coloured or black particles may be provided between the upper layer 2 and the lower layer 4. Such an embodiment is shown in Figure 6. The particles of this intermediate layer have substantially the same properties, in terms of contact angle with liquid 10, size, shape etc as the particles of the upper layer 2 with the exception that they are coloured. If such an intermediate layer is used it does not matter what colour the particles of the lower layer are as they will not be seen. A further option would be to use a coloured liquid 10.

The liquid 10 has a contact angle greater than 90° with the particles 8. The particles 8 are conductive.

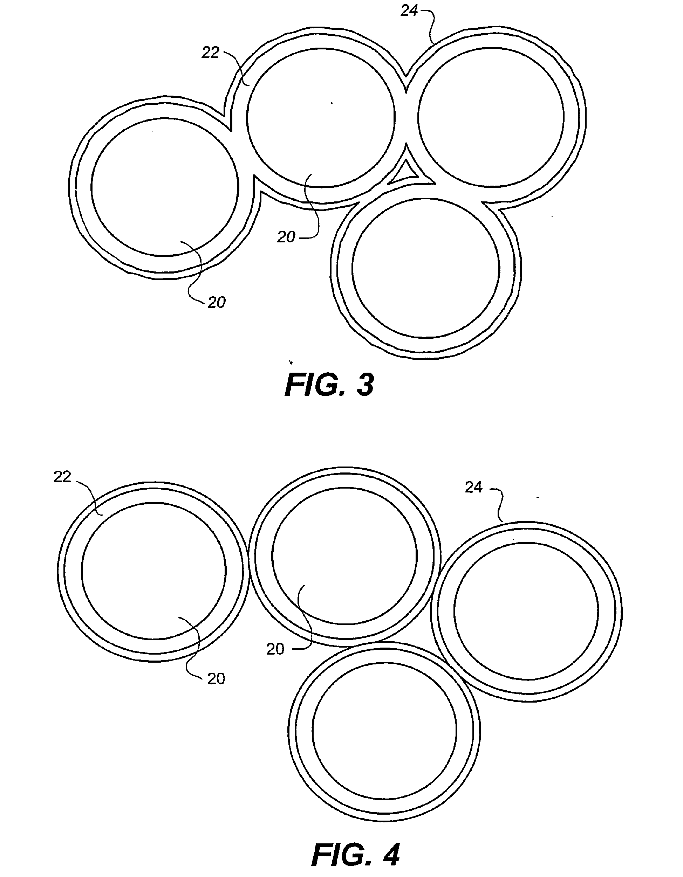

The particles may be solid metal particles or only the shell thereof may be conductive. If the particles have a shell the thickness of the shell can be chosen to create a particular coloured particle. An explanation of this can be found in Seed-mediated Growth Techniques for the Preparation of a Silver Nanoshell on a Silica Sphere, Zhong-jie Jiang and Chun-yan Liu, J. Phys. Chem B 2003, 107, 12411-12415. Whichever type of particle is used they should be covered with an electrically insulating thin layer or covering 24 of a lyophobic material with low contact angle hysteresis. Suitable particles would be conductive silver particles encased with lyophobic and dielectric mercaptan. It will be understood by those skilled in the art that this is an example only and any conductive material and lyophobic covering could be used within the terms of the invention. Figures 3 and 4 illustrate possible core shell arrangements of the particles. The core 20 may be a cheap insulating particle such as silica. A metal shell 22 encapsulates each core 20. The layer of lyophobic material 24 surrounds the shelled particles. The layer 24 may be made of, for example, polymer. Other materials which may be used include a polyelectrolyte, a fluoropolymer, a self assembled monolayer (SAM) or an inorganic shell. However the invention is not to be taken as limited to these materials. For DC operation the metal cores 20 of the particles 8 in the lower layer 4 should be connected and the lyophobic electrically insulating covering 24 completely encapsulate the structure. For DC operation all particle cores of layer 4 need to be connected to the conductor 14. For AC operation the particles can be individually encapsulated with lyophobic and electrically insulating shells. The structure illustrated in Figure 3 will work with both AC and DC operation

The liquid 10 has a high advancing contact angle with the particles 8 of the lower layer. Therefore the capillary pressure is such that no liquid 10 will enter the lower layer from the upper layer. The liquid will remain in the upper layer 2 since the lower layer 4 is lyophobic. Thus, with no voltage applied between the conductors 12, 14, and the liquid the liquid 10 resides in the upper layer 2. As the liquid 10 and the particles 6 have a similar refractive index the upper layer will appear essentially transparent or translucent. The particles 8 of the-lower layer 4 - scatter the light. Therefore the colour of the particles in the lower layer can be seen. In the embodiment of the invention including an intermediate layer, see Figure 6, the colour of the particles forming the intermediate layer will be seen. On application of a voltage between the liquid and the conductors 12, 14 an effect called "electrowetting" takes effect. Electrowetting is explained in Blake et al, Langmuir 2000, 16, 2928-2935. The voltage applied is in the order of 1 volt, a maximum of 20V being envisaged.

The applied voltage causes an electrowetting effect which reduces the contact angle of the liquid 10 with the lower layer 4. The usual electrowetting equation may be used

$$\cos(\theta) = \cos(\theta_0) + \frac{\varepsilon\varepsilon_0 V^2}{2d\gamma}$$

Where $\theta$ is the contact angle in the presence of a voltage, $\theta_0$ is the contact angle with no voltage, $V$ is the voltage, $\varepsilon$ is the dielectric constant of the lyophobic layer, $\varepsilon_0$ is the permittivity of free space, $\gamma$ is the liquid surface tension and $d$ is the thickness of the lyophobic layer. The capillary pressure, $\Delta P$, within the pore system can be defined as

$$\Delta P^t = \frac{\gamma\cos(\theta)}{a}$$

Where $\alpha$ is the average pore radius within the porous structure. If we define the upper layer as $A$ and the lower layer as $B$, then
liquid moves from the upper to lower layer if $\Delta P_A \langle \Delta P_B$
and moves from the lower to upper layer if $\Delta P_A \rangle \Delta P_B$

For a lyophobic bottom layer and lyophilic top layer and with $V=0$, $\Delta P_A$ is positive and $\Delta P_B$ is negative. The capillary pressure is therefore unfavourable for the liquid 10 to move into the lower layer 4. When sufficient voltage is applied, $\Delta P_B$ increases until it is greater than $\Delta P_A$ at which point the liquid 10 will move into the lower layer 4. The upper layer 2, now largely empty of liquid 10, will strongly scatter light and appear white. On subsequent removal of the voltage, $\Delta P_B$ will fall and, provided it falls below that of the upper layer 2, the liquid 10 will be drawn back into the upper layer. Note that it is important that the upper layer never completely empties, though the system is self-limiting on application of the voltage such that this cannot easily happen.

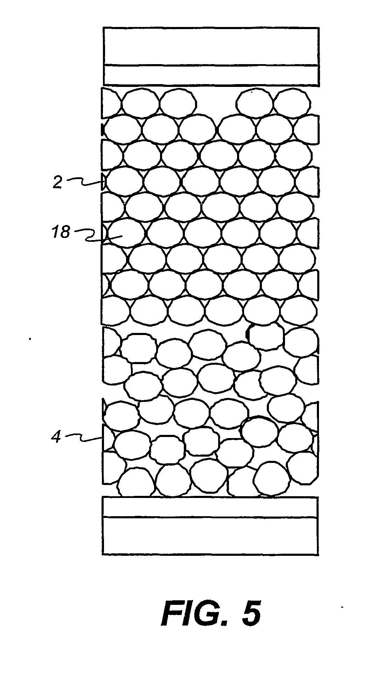

A second embodiment of the present invention is illustrated in Figure 5. In this embodiment the upper layer 2 is a photonic crystal, for example, opal or inverse opal, structure 18 rather than a random porous structure. The photonic crystal structure is very regular and the particle sizes are in the order of the wavelength of light. The crystal structure acts as a diffraction grating and reflects only particular wavelengths of light, i.e. particular colours. When the gaps in the crystal structure are filled with liquid 10, the photonic nature of the layer 2 is removed and the layer becomes transparent or translucent as described above. Colour from the lower layer 4 is then seen. However when the liquid 10 is drained from the upper layer 2, in the same way as described above, the photonic layer reflects strongly at a wavelength defined by the symmetry and spacing dimension of the crystal structure. Thus the upper layer 2 now reflects a colour defined by the size of the photonic crystals. Thus a coloured element could be made.

The following working example demonstrates the principle of the invention.

A base electrode, lower conductor, was formed by an indium tin oxide (ITO) coating on a poly-ethylene-teraphthalate (PET) base. This was used as supplied and cut into appropriately sized pieces. The ITO layer faced upwards and provided a conductive surface onto which the porous display device could be built.

The ITO base was dip coated (3-4 layers) with a fluoropolymer (Fluoropel 804A, sourced form Cytonix Corporation), which behaved as a hydrophobic dielectric layer. The thickness of the layer was approximately 3 $\mu$m.

The lower porous layer contained 200nm diameter silver particles, which were coated in a layer of octadecyl mercaptan. The silver particles were precipitated on the reduction of silver nitrate with sodium borohydride. The octadecyl mercaptan was added immediately after precipitation. The octadecyl mercaptan gave a hydrophobic and electrically insulating coating to the silver particles.

The resulting coating showed a step change in capacitance with voltage (at 2V AC peak-peak) when the capacitance was measured with a droplet of 20g/l NaCl solution placed on the surface. This indicated that the drop was being pulled reversibly in and out of the lower porous network.

An upper porous layer was coated on top of the mercaptan coated silver particles. The particles in the upper layer are polystyrene beads which were coated with colloidal silica particles. See US 5455320 and US 5750328. The particles were 650nm diameter. The upper layer was coated from an aqueous system prepared with about 25% solids, 0.1% Zonyl FSN and 1.0% gelatin.

The refractive index of the upper layer of particles was higher than that of water. So in order to increase the refractive index, 80% glycerol solution (20g/l NaCl) was used as the liquid in the device. A switching system was demonstrated. The upper layer of particles was fully wetted with the liquid and any excess liquid removed. At this stage the device had a grey appearance. A needle was then placed onto the upper surface and was in turn connected to the AC power supply. When an AC voltage was applied to the system the area surrounding the tip of the needle turned white. This indicated that the liquid in this area had been drawn down into the lower level and the device had switched. When the applied voltage was removed the area turned back to its original grey colour.

The elements can be made using coating technology. Initially a substrate comprising a pattern of electrodes is prepared by means such as printing. Subsequently a coating process, either multiple single layer coatings or one or more multi-layer coatings is used to lay down the porous layers. The coating process chosen can be unmetered or preferably pre-metered. It is well known in the coating art to manufacture porous particulate layers through single or multi-layer coating processes. The layers will then be dried. The liquid 10 can then be coated and since the top layer is lyophilic, the liquid will fill the upper layer without penetrating the lower layer. A final encapsulating layer is then provided by coating or by lamination and will contain electrodes to connect to the liquid layer.

A matrix or plurality of elements can be assembled to form a display device.

The elements of the display device would be environmentally sealed in order to encapsulate the liquid and prevent moisture ingression and liquid loss.

The invention has been described in detail with reference to preferred embodiments thereof. It will be understood by those skilled in the art that variations and modifications can be effected within the scope of the invention.

**Claims**

1. A display element comprising at least two porous layers, a conductive liquid residing in the upper layer, the liquid having a contact angle with the material of the upper layer of less than about 60°, the material of the lower layer being conductive and insulated from the liquid with a dielectric covering, the liquid having a contact angle with the material of the lower layer of greater than about 90°, whereby on application of a voltage between the lower layer and the liquid the liquid moves out of the upper layer into the lower layer thereby effecting an optical change in the upper layer.

2. An element as claimed in claim 1 wherein the upper layer comprises a plurality of particles.

3. An element as claimed in claim 1 or 2 wherein the lower layer comprises a plurality of conductive particles covered with a dielectric layer.

4. An element as claimed in claim 3 wherein the conductive particles are metallic.

5. An element as claimed in claim 3 wherein the conductive particles are organic or inorganic particles covered with a conductive shell.

6. An element as claimed in claim 5 wherein the thickness of the conductive shell is chosen to create a coloured particle.

7. An element as claimed in any preceding claim wherein the dielectric covering is a polymer, a polyelectrolyte, a fluoropolymer, a self assembled monolayer (SAM) or an inorganic shell.

8. An element as claimed in claim 7 wherein the SAM comprises a molecule with a group that bonds to the conductive particles and a group that provides a high contact angle with the liquid.

9. An element as claimed in any preceding claim wherein an intermediate layer of coloured material is provided between the upper layer and the lower layer.

10. An element as claimed in claim 9 wherein the material of the intermediate layer comprises a plurality of particles providing an average pore size substantially the same as that of the upper layer, the liquid having a contact angle with the plurality of particles of less than about 60°.

11. An element as claimed in any preceding claim wherein each layer has a pore size greater than about 30 nm and less than about 2μm.

12. An element as claimed in any preceding claim wherein the conductive liquid and the material of the upper layer have substantially the same refractive index.

13. An element as claimed in any preceding claim wherein the conductive liquid is created by adding ions to a solvent.

14. An element as claimed in any of claims 1 to 12 wherein the conductive liquid is an ionic liquid.

15. An element as claimed in any preceding claim wherein the conductive liquid contains a dye or pigment to provide a coloured liquid.

16. An element as claimed in any preceding claim wherein the upper layer comprises a photonic crystal structure.

17. A device comprising at least one element as claimed in any preceding claim including means for connection of each element to a circuit to create a matrix display.

18. A device comprising at least one element as claimed in any preceding claim, the materials of each layer being coated onto a support material.

19. A device as claimed in claim 18 wherein each element is environmentally sealed.

**Patentansprüche**

1. Display-(Anzeige-)Element mit mindestens zwei porösen Schichten, wobei in der oberen Schicht eine leitfähige Flüssigkeit vorhanden ist, die mit dem Material in der oberen Schicht einen Berührungswinkel von weniger als etwa 60° bildet und wobei das Material der unteren Schicht leitfähig ist und gegenüber der Flüssigkeit mittels einer dielektrischen Schicht isoliert ist, und wobei die Flüssigkeit mit dem Material der unteren Schicht einen Berührungswinkel von mehr als etwa 90° bildet, wodurch bei Anlegen einer Spannung zwischen der unteren Schicht und der Flüssigkeit die Flüssigkeit sich aus der oberen Schicht in die untere Schicht bewegt und **dadurch** eine optische Veränderung der oberen Schicht bewirkt.

2. Display-Element nach Anspruch 1, worin die obere Schicht eine Vielzahl von Teilchen aufweist.

3. Display-Element nach Anspruch 1 oder 2, worin die untere Schicht eine Vielzahl von leitfähigen Teilchen aufweist, die mit einer dielektrischen Schicht bedeckt sind.

4. Display-Element nach Anspruch 3, worin die leitfähigen Teilchen metallisch sind.

5. Display-Element nach Anspruch 3, worin die leitfähigen Teilchen organische oder anorganische Teilchen sind, die mit einer leitfähigen Hülle beschichtet sind.

6. Display-Element nach Anspruch 5, worin die Dicke der leitfähigen Hülle derart gewählt ist, dass ein farbiges Teilchen entsteht.

7. Display-Element nach einem der vorhergehenden Ansprüche, worin die dielektrische Schicht aus einem Polymer, einem Polyelektrolyt, einem Fluorpolymer, einer selbstorganisierten Monoschicht (SAM) oder einer anorganischen Hülle besteht.

8. Display-Element nach Anspruch 7, worin die selbstorganisierte Monoschicht ein Molekül mit einer Gruppe aufweist, die mit den leitfähigen Teilchen verklebt, und mit einer Gruppe, die einen großen Berührungswinkel mit der Flüssigkeit aufweist.

9. Display-Element nach einem der vorhergehenden Ansprüche, worin eine Zwischenschicht aus farbigem Material zwischen der oberen Schicht und der unteren Schicht vorgesehen ist.

10. Display-Element nach Anspruch 9, worin das Material der Zwischenschicht eine Vielzahl von Teilchen aufweist, die eine durchschnittliche Porengröße haben, die im wesentlichen der Porengröße der oberen Schicht entspricht, und worin die Flüssigkeit einen Berührungswinkel von weniger als etwa 60° mit der Vielzahl von Teilchen bildet.

11. Display-Element nach einem der vorhergehenden Ansprüche, worin jede Schicht eine Porengröße aufweist, die größer ist als etwa 30 nm und kleiner als etwa 2 μm.

12. Display-Element nach einem der vorhergehenden Ansprüche, worin die leitfähige Flüssigkeit und das Material der oberen Schicht im wesentlichen den gleichen Brechungsindex haben.

13. Display-Element nach einem der vorhergehenden Ansprüche, worin die leitfähige Flüssigkeit durch Beifügen von Ionen zu einem Lösungsmittel erzeugt wird.

14. Display-Element nach einem der Ansprüche 1 bis 12, worin die leitfähige Flüssigkeit eine ionenhaltige Flüssigkeit ist.

15. Display-Element nach einem der vorhergehenden Ansprüche, worin die leitfähige Flüssigkeit einen Farbstoff oder ein Pigment enthält, um eine farbige Flüssigkeit bereitzustellen.

16. Display-Element nach einem der vorhergehenden Ansprüche, worin die obere Schicht eine photonische Kristallstruktur aufweist.

17. Vorrichtung mit mindestens einem Display-Element nach einem der vorhergehenden Ansprüche, mit Mitteln zum Anschließen eines jeden Elements an einen Schaltkreis zum Erzeugen eines Matrix-Displays.

18. Vorrichtung mit mindestens einem Element nach einem der vorhergehenden Ansprüche, wobei die Materialien einer jeden Schicht auf ein Trägermaterial aufgebracht werden.

19. Vorrichtung nach Anspruch 18, worin jedes Element umweltverträglich abgedichtet ist.

**Revendications**

1. Elément d'affichage comprenant au moins deux couches poreuses, un liquide conducteur situé dans la couche supérieure, le liquide ayant un angle de contact avec le matériau de la couche supérieure inférieur à 60° environ, le matériau de la couche inférieure étant conducteur et isolé du liquide par une couche de couverture diélectrique, le liquide ayant un angle de contact avec le matériau de la couche inférieure supérieur à 90° environ, à la suite de quoi lors de l'application d'une tension entre la couche inférieure et le liquide, le liquide se déplace de la couche supérieure dans la couche inférieure, en opérant une modification optique dans la couche supérieure.

2. Elément selon la revendication 1, dans lequel la couche supérieure comprend une pluralité de particules.

3. Elément selon la revendication 1 ou 2, dans lequel la couche inférieure comprend une pluralité de particules conductrices revêtues d'une couche diélectrique.

4. Elément selon la revendication 3, dans lequel les particules conductrices sont métalliques.

5. Elément selon la revendication 3, dans lequel les particules conductrices sont des particules organiques ou inorganiques revêtues d'une coque conductrice.

6. Elément selon la revendication 5, dans lequel l'épaisseur de la coque conductrice est choisie de manière à créer une particule colorée.

7. Elément selon l'une quelconque des revendications précédentes, dans lequel la couche de couverture diélectrique est un polymère, un polyélectrolyte, un fluoropolymère, une monocouche auto-assemblée (MAA) ou une coque inorganique.

8. Elément selon la revendication 7, dans lequel la MAA (monocouche auto-assemblée) comprend une molécule ayant un groupe qui se lie aux particules conductrices et un groupe qui forme un grand angle de contact avec le liquide.

9. Elément selon l'une quelconque des revendications précédentes, dans lequel une couche intermédiaire de matériau coloré est placée entre la couche supérieure et la couche inférieure.

10. Elément selon la revendication 9, dans lequel le matériau de la couche intermédiaire comprend une pluralité de particules ayant une taille moyenne de pores sensiblement identique à celle de la couche supérieure, le liquide formant avec la pluralité de particules un angle de contact inférieur à 60° environ.

11. Elément selon l'une quelconque des revendications précédentes, dans lequel chaque couche a une taille de pores supérieure à 30 nm environ et inférieure à 2 $\mu$m environ.

12. Elément selon l'une quelconque des revendications précédentes, dans lequel le liquide conducteur et le matériau de la couche supérieure ont sensiblement le même indice de réfraction.

13. Elément selon l'une quelconque des revendications précédentes, dans lequel le liquide conducteur est créé par addition d'ions à un solvant.

14. Elément selon l'une quelconque des revendications 1 à 12, dans lequel le liquide conducteur est un liquide ionique.

15. Elément selon l'une quelconque des revendications précédentes, dans lequel le liquide conducteur contient un colorant ou un pigment permettant de créer un liquide coloré.

16. Elément selon l'une quelconque des revendications précédentes, dans lequel la couche supérieure comprend une structure cristalline photonique.

17. Dispositif comprenant au moins un élément tel que revendiqué dans l'une quelconque des revendications précédentes comprenant un moyen de raccordement de chaque élément à un circuit pour créer un affichage matriciel.

18. Dispositif comprenant au moins un élément tel que revendiqué dans l'une quelconque des revendications précédentes, où les matériaux de chaque couche sont appliqués sur un matériau servant de support.

19. Dispositif selon la revendication 18, dans lequel chaque élément est étanche.

**FIG. 1**

**FIG. 2**

**FIG. 3**

**FIG. 4**

**FIG. 5**

**FIG. 6**

**EP 1 730 575 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6473492 B
- US 20020080920 A
- US 20030085850 A
- US 6449081 B
- WO 2002099527 A
- US 5455320 A
- US 5750328 A

**Non-patent literature cited in the description**

- **ZHONG-JIE JIANG ; CHUN-YAN LIU.** *J. Phys. Chem B,* 2003, vol. 107, 12411-12415
- **BLAKE et al.** *Langmuir,* 2000, vol. 16, 2928-2935